(19) Europäisches Patentamt
European Patent Office
Office européen des brevets

(11) **EP 3 982 163 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **20201162.3**

(22) Anmeldetag: **09.10.2020**

(51) Internationale Patentklassifikation (IPC):
**G01T 1/178** *(2006.01)*

(52) Gemeinsame Patentklassifikation (CPC):
**G01T 1/178**

(54) **VERFAHREN UND VORRICHTUNG ZUM MESSEN VON LUFTGETRAGENER ALPHA- UND BETA-STRAHLUNG KÜNSTLICHEN URSPRUNGS MITTELS EINES HALBLEITERDETEKTORS**

METHOD AND DEVICE FOR MEASURING AIRBORNE ALPHA AND BETA RADIATION OF ARTIFICIAL ORIGIN USING A SEMICONDUCTOR DETECTOR

PROCÉDÉ ET DISPOSITIF DE MESURE DU RAYONNEMENT ALPHA ET BÊTA PRÉSENT DANS L'AIRE D'ORIGINE ARTIFICIELLE AU MOYEN D'UN DÉTECTEUR SEMI-CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.04.2022 Patentblatt 2022/15**

(73) Patentinhaber: BERTHOLD TECHNOLOGIES GmbH & Co. KG
**75323 Bad Wildbad (DE)**

(72) Erfinder:
• **Reuter, Wilfried**
**75334 Straubenhardt (DE)**
• **Greim, Roman**
**76133 Karlsruhe (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**DE-A1- 102010 000 836     JP-A- H0 915 336**

• **JOSEPH F KORDAS ET AL: "A REVIEW OF MEASUREMENT TECHNIQUES FOR STACK MONITORING OF LONG-LIVED ALPHA EMITTERS", IEEE TRANSACTIONS ON NUCLEAR SCIENCE,, vol. NS-26, no. 1, 1 February 1979 (1979-02-01), XP001447022**

**Beschreibung**

Die Erfindung betrifft ein Verfahren und eine Vorrichtung zum Messen von luftgetragener Alpha- und Beta-Strahlung künstlichen Ursprungs mittels eines Halbleiterdetektors.

Die DE 10 2010 000 836 A1 offenbart ein Verfahren und eine Vorrichtung zum Messen von luftgetragener Alpha- und Beta-Strahlung künstlichen Ursprungs mittels eines Halbleiterdetektors. Das Verfahren verwendet hierbei eine Alpha-Beta-Pseudokoinzidenz-Diskriminierung bzw. eine Alpha-Beta-Pseudokoinzidenz-Differenzmethode (ABPD). Hierbei können detektierte Ereignisse der vorhandenen natürlichen Radioaktivität zugerechnet werden, wenn ein Alpha-Ereignis und ein Beta-Ereignis innerhalb einer definierten Zeitspanne registriert werden. Eine derart ermittelte Zählrate wird von der gesamten gemessenen Alpha- bzw. Beta-Zählrate subtrahiert, womit ein Maß für die Radioaktivität künstlichen Ursprungs berechnet werden kann. Bei diesem Verfahren kann jedoch vor allem bei schnell abfallendem Radonpegel regelmäßig ein mehr oder wenig großer positiver Peak in der berechneten spezifischen Alpha- oder Beta-Aktivität entstehen, was das Setzen einer gewünschten niedrigen Alarmschwelle erschwert.

Die Veröffentlichung JOSEPH F KORDAS ET AL: "A REVIEW OF MEASUREMENT TECH-NIQUES FOR STACK MONITORING OF LONG-LIVED ALPHA EMITTERS", IEEE TRANSAC-TIONS ON NUCLEAR SCIENCE, Bd. NS-26, Nr. 1, 1. Februar 1979 (1979-02-01) offenbart einen Luftstrahlungsmonitor mit einer Kompensation eines natürlichen Strahlungshintergrunds im Energiebereich zwischen 5,6 und 6,2 MeV.

Der Erfindung liegt die Aufgabe zugrunde, das in der DE 10 2010 000 836 A1 offenbarte Verfahren bzw. die in der DE 10 2010 000 836 A1 offenbarte Vorrichtung zu verbessern, insbesondere im Hinblick auf die möglichst effektive Kompensation von Strahlungsbeiträgen natürlichen Ursprungs und/oder im Hinblick auf die Messgenauigkeit bei schnellen dynamischen Veränderungen der Strahlungsbeiträge natürlichen Ursprungs.

Das erfindungsgemäße Verfahren dient zum Messen von luftgetragener Alpha- und Beta-Strahlung künstlichen Ursprungs mittels eines Halbleiterdetektors und der Anreicherungsmethode von radioaktiven Aerosolen auf einem Membranfilter.

Zur Messung der luftgetragenen Alpha-Strahlung künstlichen Ursprungs werden während eines vorgegebenen Zeitintervalls die nachfolgend beschriebenen Schritte durchgeführt.

Es wird eine Anzahl A1 von Teilchen gezählt, die auf den Halbleiterdetektor treffen und die eine Energie aufweisen, die größer ist als ein erster Energie-Schwellenwert und kleiner ist als ein zweiter Energie-Schwellenwert.

Es wird gleichzeitig eine Anzahl A2 von Teilchen gezählt, die auf den Halbleiterdetektor treffen und die eine Energie aufweisen, die in einem vorgegebenen Energiebereich um die Po-218-Energielinie bzw. $^{218}$Po-Energielinie liegt.

Es wird eine kompensierte Zählrate A$\alpha$ von Alpha-Teilchen in Abhängigkeit von der ersten Zählrate A1 und der zweiten Zählrate A2 berechnet.

Schließlich wird eine Messgröße, die die luftgetragene Alpha-Strahlung künstlichen Ursprungs charakterisiert, basierend auf der kompensierten Zählrate A$\alpha$ von Alpha-Teilchen berechnet. Die Messgröße kann beispielsweise im einfachsten Fall eine Zählrate sein oder eine daraus abgeleitete Größe, beispielsweise eine Aktivität der die Alpha-Strahlung emittierenden Nuklide künstlichen Ursprungs auf dem Filter oder der daraus abgeleiteten spezifischen Alpha Aktivität im Raum, usw.

Zur Messung der luftgetragenen Beta-Strahlung künstlichen Ursprungs werden während des vorgegebenen Zeitintervalls folgende Schritte durchgeführt.

Es wird eine Anzahl A3 von Teilchen gezählt, die auf den Halbleiterdetektor treffen und die eine Energie aufweisen, die größer als eine Rauschschwelle So und kleiner als der erste Energie-Schwellenwert ist.

Gleichzeitig wird eine Anzahl A4 von Teilchen gezählt, die auf den Halbleiterdetektor treffen und die eine Energie aufweisen, die größer ist als der zweite Energie-Schwellenwert.

Es wird eine kompensierte Zählrate A$\beta$ von Beta-Teilchen in Abhängigkeit von der dritten Zählrate A3 und der vierten Zählrate A4 berechnet.

Schließlich wird eine Messgröße, die die luftgetragene Beta-Strahlung künstlichen Ursprungs charakterisiert, basierend auf der kompensierten Zählrate A$\beta$ von Beta-Teilchen berechnet. Die Messgröße kann beispielsweise im einfachsten Fall eine Zählrate sein oder eine daraus abgeleitete Größe, beispielsweise eine Aktivität der die Beta-Strahlung emittierenden Nuklide künstlichen Ursprungs auf dem Filter oder der daraus abgeleiteten spezifischen Beta Aktivität im Raum, usw.

Das vorgegebene Zeitintervall für die Mittelung der Messdaten kann beispielsweise eine Dauer zwischen 10 min und 60 min aufweisen.

Erfindungsgemäß ist es möglich, die Strahlungsbeiträge künstlichen Ursprungs wirkungsvoll und einfach von Strahlungsbeiträgen natürlichen Ursprungs zu trennen, beispielsweise Strahlungsbeiträgen von Radon- und/oder Thoron-Tochternukliden.

Die kompensierte Zählrate von Alpha-Teilchen wird mit der Formel A$\alpha$ = A1- k1* A2 * (1 + k2 * A2) berechnet, wobei k1 und k2 Kompensationsfaktoren sind. Die Kompensationsfaktoren k1 und k2 können experimentell bestimmt werden und betragen beispielsweise 0,7 und -0,05. Die kompensierte Zählrate von Beta-Teilchen wird mit der Formel A$\beta$ = A3- k3* A4 * (1 + k4 * A4) berechnet, wobei k3 und k4 Kompensationsfaktoren sind. Die Kompensationsfaktoren k3 und k4 können experimentell bestimmt werden und betragen beispielsweise 1,4 und -0,002.

Gemäß einer Ausführungsform liegt der erste Energie-Schwellenwert oberhalb eines Energiespektrums der Beta-Strahlung künstlichen Ursprungs und gemäß der Erfindung liegt der zweite Energie-Schwellenwert auf der niederenergetischen abfallenden Flanke der Po-218-Energielinie, beispielsweise bei ca. 5,8 MeV, und oberhalb eines Energiespektrums der Alpha-Strahlung künstlichen Ursprungs. Gemäß einer Ausführungsform deckt der vorgegebene Energiebereich um die Po-218-Energielinie Energien zwischen 5,8 MeV und ca. 6,3 MeV ab.

Die erfindungsgemäße Vorrichtung dient zum Messen von luftgetragener Alpha- und Beta-Strahlung künstlichen Ursprungs.

Die Vorrichtung weist einen Halbleiterdetektor und eine Auswerteeinheit auf, die mit dem Halbleiterdetektor gekoppelt ist. Die Auswerteeinheit ist zur Durchführung des oben beschriebenen Verfahrens ausgebildet.

Die Auswerteeinheit kann ein Mikroprozessor sein. Zwischen Halbleiterdetektor und Auswerteeinheit können ein Verstärker, ein oder mehrere Einkanaldiskriminatoren, ein oder mehrere Integraldiskriminatoren, Logikschaltungen etc. eingeschleift sein.

Gemäß einer Ausführungsform ist, insbesondere direkt, vor dem Halbleiterdetektor ein Kollimator angeordnet.

Gemäß einer Ausführungsform weist der Kollimator eine bienenwabenförmige Struktur mit bienenwabenförmigen Zellen auf.

Gemäß einer Ausführungsform weisen die bienenwabenförmigen Zellen einen Durchmesser zwischen 2 mm und 6 mm und eine Höhe zwischen 2 mm und 4 mm auf.

Gemäß einer Ausführungsform sind mittels des Kollimators, insbesondere im transuranen Bereich, mehrere Einkanaldiskriminatoren mit Energieschwellen Sn und Sn+1 definiert, die dazu ausgebildet sein können, spezifische Aktivitäten einzelner Nuklide künstlichen Ursprungs, beispielsweise U-238, U-234, Am-241, Pu-238, gleichzeitig und doch getrennt voneinander zu bestimmen.

Gemäß einer Ausführungsform ist der Halbleiterdetektor ein Si-Halbleiterdetektor.

Erfindungsgemäß wird messtechnisch ein Alpha-Spektrum der Alpha-Nuklide natürlichen Ursprungs erzeugt, welches einen möglichst schnellen Abfall des niederenergetischen Ausläufers besitzt, der unterhalb 5,8 MeV in den Bereich der Transurane hineinverläuft und als Untergrund kompensiert bzw. abgezogen werden muss.

Hierzu kann erfindungsgemäß anstelle eines herkömmlichen Glasfaserfilters ein Membranfilter verwendet werden, wobei auf Grund dessen Eigenschaften die Eintauchtiefe der Aerosole mit den daran gebundenen Tochternukliden des Radons/Thorons in das Filter hinein wesentlich kleiner ist und dadurch vor allem die Alpha-Strahlung weniger Energie durch Vorabsorption verliert. Dadurch wird vor allem auch wegen der geringeren Halbwertbreite die Po-218-Energielinie besser von der großen Po-214-Energielinie getrennt.

Diesen Effekt kann man noch verstärken, indem man direkt vor den Halbleiterdetektor einen Kollimator anordnet, welcher zwischen Entstehungsort auf dem Filter und Auftreffpunkt im Detektor schräg fliegende Alpha-Teilchen mit höherem Energieverlust reduziert und damit die Auflösung der Alpha-Linien nochmals verbessert und den niederenergetischen Ausläufer verkleinert.

Dieser Kollimator kann eine bienenwabenförmige Struktur mit sehr geringer Wandstärke, hoher Stabilität und großer Transmission sein. Damit kann durch Setzen unterschiedlicher Einkanaldiskriminatoren mit je zwei Energieschwellen Sn und Sn+1 innerhalb des Spektrums im transuranen Bereich bis zu einem gewissen Grad die Trennung verschiedener Nuklide künstlichen Ursprungs und damit die Bestimmung der individuellen spezifischen Alpha-Aktivität möglich sein, allerdings wegen der kleineren Zählrate mit einer etwas verminderter Genauigkeit.

Der Untergrund von den Alpha-Linien künstlichen Ursprungs mit jeweils höherer Energie kann mit einer Spillover-Korrektur korrigiert werden.

Bevorzugte Ausführungsformen der Erfindung sind in den Zeichnungen schematisch dargestellt und werden im Folgenden näher erläutert. Hierbei zeigt:

Fig. 1   ein Blockschaltbild einer Vorrichtung zum Messen von luftgetragener Alpha- und Beta-Strahlung künstlichen Ursprungs und

Fig. 2   ein exemplarisches Impulshöhenspektrum in Gegenwart natürlicher Nuklide mit unterschiedlichen Energie-Schwellenwerten.

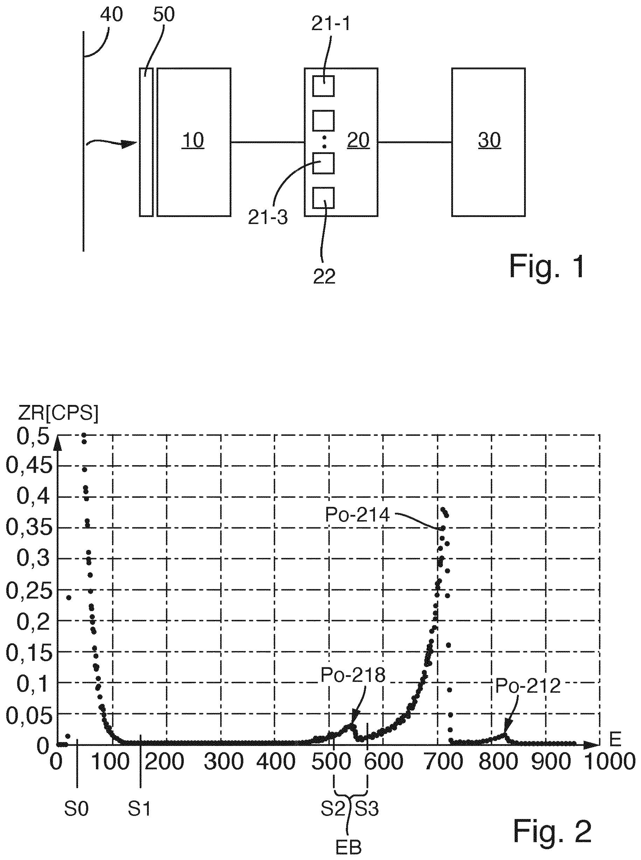

Fig. 1 zeigt schematisch eine Vorrichtung zum Messen von luftgetragener Alpha- und Beta-Strahlung künstlichen Ursprungs.

Die Vorrichtung weist einen herkömmlichen Si-Halbleiterdetektor in Form eines Si-Oberflächensperrschichtdetektors 10 auf.

Die Vorrichtung weist einen dem Si-Halbleiterdetektor 10 nachgeschalteten Verstärker 20 auf. Der Verstärker 20 weist drei Einkanaldiskriminatoren 21-1, ..., 21-3 auf, die zugehörige Diskriminatorschwellen aufweisen. Der Verstärker weist weiter einen Integraldiskriminator 22 auf, der eine zugehörige Diskriminatorschwelle aufweist.

Die Vorrichtung weist weiter eine Auswerteeinheit in Form eines Mikroprozessors 30 auf, der mit dem Si-Halbleiterdetektor 10 über den Verstärker 20 gekoppelt und dazu ausgebildet ist, Strahlungsbeiträge künstlichen Ursprungs zu messen, wobei Strahlungsbeiträge natürlichen Ursprungs erfindungsgemäß effektiv unterdrückt werden.

Es versteht sich, dass weitere, nicht gezeigte, herkömmliche Elemente vorhanden sein können, die jedoch zur Beschreibung der Erfindung nicht wesentlich sind. Daher kann auf eine Beschreibung solcher Elemente verzichtet werden. Insoweit sei auch auf die einschlägige Fachliteratur verwiesen.

Die in Fig. 1 gezeigte Vorrichtung kann beispielsweise für Festfilteranlagen oder für Filterband-Messsysteme verwendet werden, bei denen Aerosole, die radioaktive Partikel als Strahler künstlichen und natürlichen Ursprungs tragen, durch ein Filter bzw. ein Filterband 40 geleitet werden, wodurch die Partikel zumindest teilweise im Filter bzw. dem Filterband 40 verbleiben. Der Si-Halbleiterdetektor 10 wird in der Nähe des Filters bzw. des Filterbands 40 angeordnet und mit der Strahlung der Partikel des Filterbands 40 beaufschlagt. Optional kann direkt vor dem Detektor 10 ein Kollimator 50 angeordnet sein.

Der Verstärker 20 bzw. dessen Integraldiskriminator 22 und dessen Einkanaldiskriminatoren 21-1 bis 21-3 weist/weisen mehrere, nach Energie getrennte Kanäle mit unterschiedlichen Diskriminatorschwellen bzw. Energie-Schwellenwerten So, S1, S2 und S3 auf, siehe auch Fig. 2.

Der Integraldiskriminator 22 erzeugt digitale Impulse, wenn ein Scheitelwert eines durch den Si-Halbleiterdetektor 10 erzeugten analogen Signals die zugehörige Diskriminatorschwelle bzw. den Energie-Schwellenwert S2 übersteigt, wobei die digitalen Impulse der Alpha-Strahlung größer als 5,8 MeV, d.h. natürlichen Ursprungs, zugeordnet werden.

Der erste Einkanaldiskriminator 21-1 erzeugt digitale Impulse für alle analogen Signale des Si-Halbleiterdetektors 10, welche größer als eine Rauschschwelle So und kleiner als der erste Energie-Schwellenwert S1 sind, wobei diese digitalen Impulse der Beta-Strahlung zugeordnet werden.

Der zweite Einkanaldiskriminator 21-2 erzeugt digitale Impulse für alle analogen Signale des Si-Halbleiterdetektors 10, welche zwischen den Energie-Schwellenwerten S1 und S2 liegen, wobei diese digitalen Impulse der Alpha-Strahlung im transuranen Bereich d.h. künstlichen Ursprungs zugeordnet werden.

Der dritte Einkanaldiskriminator 21-3 erzeugt digitale Impulse für alle analogen Signale des Si-Halbleiterdetektors 10, welche in einem Energiebereich EB zwischen den Energie-Schwellenwerten S2 und S3 liegen, wobei die digitalen Impulse der Po-218 Zählrate zugeordnet werden.

Es versteht sich, dass weitere Einkanaldiskriminatoren mit Schwellen Sn und Sn+1 vorhanden sein können.

Ein jeweiliger Kanal ist mit einem zugehörigen Eingangsport der Auswerteeinheit 30 gekoppelt. Die Auswerteeinheit 30 zählt während eines vorgegebenen Zeitintervalls, das eine Dauer in einem Bereich von einigen Sekunden bis mehreren Stunden aufweisen kann, eine Anzahl von Impulsen pro Kanal und ermittelt daraus eine zugehörige Zählrate.

Fig. 2 zeigt ein exemplarisches Impulshöhenspektrum in Gegenwart natürlicher Nuklide mit den unterschiedlichen Energie-Schwellenwerten So, S1, S2 und S3, einer Po-212 Energielinie, einer Po-214-Energielinie, einer Po-218-Energielinie und einem Energiebereich EB, begrenzt durch die Energie-Schwellenwerte S2 und S3, um die Po-218-Energielinie. Auf der Y-Achse ist die Energie E aufgetragen und auf der Y-Achse ist die zugehörige Zählrate ZR aufgetragen.

Der erste Energie-Schwellenwert S1 der Energie-Diskriminierung liegt oberhalb eines Energiespektrums der Beta-Strahlung künstlichen Ursprungs und entspricht beispielsweise einer Energie von ca. 1,5 MeV. Teilchen mit einer Energie, die größer als 1,5 MeV ist, sind typisch Alpha-Teilchen sowohl künstlichen als auch natürlichen Ursprungs. Teilchen mit einer Energie, die kleiner als 1,5 MeV und größer als eine Rauschschwelle So des Si-Halbleiterdetektors 10 ist, sind typisch Beta-Teilchen sowohl künstlichen als auch natürlichen Ursprungs.

Der zweite Energie-Schwellenwert S2 der Energie-Diskriminierung liegt auf der niederenergetischen abfallenden Flanke der Po-218-Energielinie, d.h. auf der linken Seite der Po-218-Energielinie, und oberhalb des Energiespektrums der luftgetragenen Alpha-Strahlung künstlichen Ursprungs. Der zweite Energie-Schwellenwert S2 definiert auch die untere Grenze des Energiebereichs EB um die Po-218-Energielinie.

Der dritte Energie-Schwellenwert S3 der Energie-Diskriminierung definiert die obere Grenze des Energiebereichs EB um die Po-218-Energielinie.

Nachfolgend wird das erfindungsgemäße Verfahren zum Messen von luftgetragener Alpha- und Beta-Strahlung künstlichen Ursprungs mittels des Si-Halbleiterdetektors 10 beschrieben.

Während eines vorgegebenen Zeitintervalls, welches beispielsweise eine Dauer zwischen 10 min und 60 min aufweisen kann, wird in der Auswerteeinheit 30 zur Messung der luftgetragenen Alpha-Strahlung künstlichen Ursprungs eine Anzahl A1 von Teilchen gezählt, die auf den Halbleiterdetektor 10 treffen und die eine Energie aufweisen, die größer ist als der erste Energie-Schwellenwert S1 und kleiner ist als der zweite Energie-Schwellenwert S2, es wird eine Anzahl A2 von Teilchen gezählt, die auf den Halbleiterdetektor 10 treffen und die eine Energie aufweisen, die in dem vorgegebenen Energiebereich EB um die Po-218-Energielinie liegt, es wird eine kompensierte Zählrate $A\alpha$ von Alpha-Teilchen in Abhängigkeit von der ersten Zählrate A1 und der zweiten Zählrate A2 berechnet, und schließlich wird die Messgröße, die die luftgetragene Alpha-Strahlung künstlichen Ursprungs charakterisiert, basierend auf der kompensierten Zählrate $A\alpha$ von Alpha-Teilchen bestimmt.

Entsprechend wird während des vorgegebenen Zeitintervalls zur Messung der luftgetragenen Beta-Strahlung künstlichen Ursprungs eine Anzahl A3 von Teilchen gezählt, die auf den Halbleiterdetektor 10 treffen und die eine Energie aufweisen, die größer ist als die Rauschschwelle So und die kleiner ist als der erste Energie-Schwellenwert S1, es wird eine Anzahl A4 von Teilchen gezählt, die auf den Halbleiterdetektor 10 treffen und die eine Energie aufweisen, die größer ist als der zweite Energie-Schwellenwert S2, es wird eine kompensierte Zählrate Aß von Beta-Teilchen in Abhängigkeit von der dritten Zählrate A3 und der vierten Zählrate A4 berechnet, und schließlich wird die Messgröße, die die luftgetragene Beta-Strahlung künstlichen Ursprungs charakterisiert, basierend auf der kompensierten Zählrate Aß von Beta-Teilchen berechnet.

Die kompensierte Zählrate Aα von Alpha-Teilchen wird mit der Formel

$$A\alpha = A1 - k1 * A2 * (1 + k2 * A2)$$

berechnet, wobei k1 und k2 Kompensationsfaktoren sind.

Die kompensierte Zählrate Aß von Beta-Teilchen wird mit der Formel

$$A\beta = A3 - k3 * A4 * (1 + k4 * A4)$$

berechnet, wobei k3 und k4 Kompensationsfaktoren sind.

Optional können beim Einsatz des Kollimators 50 direkt vor dem Halbleiterdetektor im transuranen Bereich auch mehrere Einkanaldiskriminatoren mit den Energieschwellen Sn und Sn+1 definiert sein, um die spezifischen Aktivitäten einzelner Nuklide künstlichen Ursprungs mit diesem Verfahren gleichzeitig und doch separat zu bestimmen.

Mittels der Erfindung ist eine effektive Kompensation von Strahlungsbeiträgen natürlichen Ursprungs möglich, wobei die Messgenauigkeit bei dynamischen Veränderungen der Strahlungsbeiträge natürlichen Ursprungs erhöht werden kann. Die Erfindung ermöglicht insbesondere die Verwendung von Halbleiterdetektoren bei kleinen und mobilen Messsystemen mit geringem Luftdurchsatz.

**Patentansprüche**

1. Verfahren zum Messen von luftgetragener Alpha- und Beta-Strahlung künstlichen Ursprungs mittels eines Halbleiterdetektors (10),

   - wobei zur Messung der luftgetragenen Alpha-Strahlung künstlichen Ursprungs während eines vorgegebenen Zeitintervalls folgende Schritte durchgeführt werden:

     - Zählen einer Anzahl A1 von Teilchen, die auf den Halbleiterdetektor (10) treffen und die eine Energie aufweisen, die größer ist als ein erster Energie-Schwellenwert (S1) und kleiner ist als ein zweiter Energie-Schwellenwert (S2),

     - Zählen einer Anzahl A2 von Teilchen, die auf den Halbleiterdetektor (10) treffen und die eine Energie aufweisen, die in einem vorgegebenen Energiebereich (EB) um die Po-218-Energielinie liegt,
     - Berechnen einer kompensierten Zählrate Aα von Alpha-Teilchen in Abhängigkeit von der ersten Zählrate A1 und der zweiten Zählrate A2, und
     - Bestimmen einer Messgröße, die die luftgetragene Alpha-Strahlung künstlichen Ursprungs charakterisiert, basierend auf der kompensierten Zählrate Aα von Alpha-Teilchen, und

   - wobei zur Messung der luftgetragenen Beta-Strahlung künstlichen Ursprungs während des vorgegebenen Zeitintervalls folgende Schritte durchgeführt werden:

     - Zählen einer Anzahl A3 von Teilchen, die auf den Halbleiterdetektor (10) treffen und die eine Energie aufweisen, die kleiner ist als der erste Energie-Schwellenwert (S1),
     - Zählen einer Anzahl A4 von Teilchen, die auf den Halbleiterdetektor (10) treffen und die eine Energie aufweisen, die größer ist als der zweite Energie-Schwellenwert (S2),
     - Berechnen einer kompensierten Zählrate Aß von Beta-Teilchen in Abhängigkeit von der dritten Zählrate A3 und der vierten Zählrate A4, und
     - Bestimmen einer Messgröße, die die luftgetragene Beta-Strahlung künstlichen Ursprungs charakterisiert, basierend auf der kompensierten Zählrate Aß von Beta-Teilchen,

   wobei
   - der zweite Energie-Schwellenwert (S2) eine untere Grenze des Energiebereichs (EB) definiert,
   - die kompensierte Zählrate Aα von Alpha-Teilchen mit der Formel $A\alpha = A1 - k1 * A2 * (1 + k2 * A2)$ berechnet wird, wobei k1 und k2 Kompensationsfaktoren sind, und
   - die kompensierte Zählrate Aß von Beta-Teilchen mit der Formel $A\beta = A3 - k3 * A4 * (1 + k4 * A4)$ berechnet wird, wobei k3 und k4 Kompensationsfaktoren sind.

2. Verfahren nach Anspruch 1, **dadurch gekennzeichnet, dass**

   - der erste Energie-Schwellenwert (S1) oberhalb eines Energiespektrums der Beta-Strahlung künstlichen Ursprungs liegt und der zweite Energie-Schwellenwert (S2) auf der niederenergetischen abfallenden Flanke der Po-218-Energielinie und oberhalb eines Energiespektrums der luftgetragenen Alpha-Strahlung künstlichen Ursprungs liegt.

3. Verfahren nach einem der vorhergehenden Ansprüche, **dadurch gekennzeichnet, dass**

   - der vorgegebene Energiebereich (EB) um die Po-218-Energielinie Energien zwischen 5,8 MeV und ca. 6,3 MeV abdeckt.

4. Vorrichtung zum Messen von luftgetragener Alpha- und Beta-Strahlung künstlichen Ursprungs, mit

   - einem Halbleiterdetektor (10) und
   - einer Auswerteeinheit (30), die mit dem Halbleiterdetektor (10) gekoppelt ist,
   **dadurch gekennzeichnet, dass**
   - die Auswerteeinheit (30) zur Durchführung des Verfahrens nach einem der vorhergehenden Ansprüche ausgebildet ist.

5. Vorrichtung nach Anspruch 4, **dadurch gekennzeichnet, dass**, insbesondere direkt, vor dem Halbleiterdetektor (10) ein Kollimator (50) angeordnet ist.

6. Vorrichtung nach Anspruch 5, **dadurch gekennzeichnet, dass** der Kollimator (50) eine bienenwabenförmige Struktur mit bienenwabenförmigen Zellen aufweist.

7. Vorrichtung nach Anspruch 6, **dadurch gekennzeichnet, dass** die bienenwabenförmigen Zellen einen Durchmesser zwischen 2 mm und 6 mm aufweisen und eine Höhe zwischen 2 mm und 4 mm aufweisen.

8. Vorrichtung nach einem der Ansprüche 4 bis 7, **dadurch gekennzeichnet, dass**,

   - die Vorrichtung eine Anzahl von Einkanaldiskriminatoren (21-1 bis 21-3) aufweist, insbesondere auch mit Energieschwellen im transuranen Bereich.

9. Vorrichtung nach einem der Ansprüche 4 bis 8, **dadurch gekennzeichnet, dass** der Halbleiterdetektor (10) ein Si-Halbleiterdetektor (10) ist.

**Claims**

1. Method for measuring airborne alpha and beta radiation of artificial origin by means of a semiconductor detector (10),

   - wherein the following steps are carried out to measure the airborne alpha radiation of artificial origin during a predefined time interval:

     - counting a number A1 of particles that impinge on the semiconductor detector (10) and have an energy that is greater than a first energy threshold value (S1) and less than a second energy threshold value (S2),
     - counting a number A2 of particles that impinge on the semiconductor detector (10) and have an energy that is within a predefined energy range (EB) around the Po-218 energy line,
     - calculating a compensated count rate $A\alpha$ of alpha particles as a function of the first count rate A1 and the second count rate A2, and
     - determining a measurement variable that characterizes the airborne alpha radiation of artificial origin, on the basis of the compensated count rate $A\alpha$ of alpha particles, and
     - wherein the following steps are carried out to measure the airborne beta radiation of artificial origin during the predefined time interval:

       - counting a number A3 of particles that impinge on the semiconductor detector (10) and have an energy that is less than the first energy threshold value (S1),
       - counting a number A4 of particles that impinge on the semiconductor detector (10) and have an energy that is greater than the second energy threshold value (S2),
       - calculating a compensated count rate $A\beta$ of beta particles as a function of the third count rate A3 and the fourth count rate A4, and
       - determining a measurement variable that characterizes the airborne beta radiation of artificial origin, on the basis of the compensated count rate $A\beta$ of beta particles, wherein
       - the second energy threshold value (S2) defines a lower limit of the energy range (EB),
       - the compensated count rate $A\alpha$ of alpha particles is calculated using the formula $A\alpha = A1 - k1 * A2 * (1 + k2 * A2)$, where k1 and k2 are compensation factors, and
       - the compensated count rate $A\beta$ of beta particles is calculated using the formula $A\beta = A3 - k3 * A4 * (1 + k4 * A4)$, where k3 and k4 are compensation

**2.** Method according to Claim 1, **characterized in that**

- the first energy threshold value (S1) is above an energy spectrum of the beta radiation of artificial origin and the second energy threshold value (S2) is on the low-energy falling edge of the Po-218 energy line and above an energy spectrum of the airborne alpha radiation of artificial origin.

**3.** Method according to either of the preceding claims, **characterized in that**

- the predefined energy range (EB) around the Po-218 energy line covers energies of between 5.8 MeV and approx. 6.3 MeV.

**4.** Device for measuring airborne alpha and beta radiation of artificial origin, comprising

- a semiconductor detector (10) and
- an evaluation unit (30) coupled to the semiconductor detector (10), **characterized in that**
- the evaluation unit (30) is configured for carrying out the method according to any of the preceding claims.

**5.** Device according to Claim 4, **characterized in that** a collimator (50) is arranged, in particular directly, upstream of the semiconductor detector (10).

**6.** Device according to Claim 5, **characterized in that** the collimator (50) has a honeycomb-shaped structure comprising honeycomb-shaped cells.

**7.** Device according to Claim 6, **characterized in that** the honeycomb-shaped cells have a diameter of between 2 mm and 6 mm and a height of between 2 mm and 4 mm.

**8.** Device according to any of Claims 4 to 7, **characterized in that**

- the device has a number of single-channel discriminators (21-1 to 21-3), in particular also with energy thresholds in the transuranic range.

**9.** Device according to any of Claims 4 to 8, **characterized in that** the semiconductor detector (10) is an Si semiconductor detector (10).

**Revendications**

**1.** Procédé de mesure du rayonnement alpha et bêta présent dans l'air d'origine artificielle au moyen d'un détecteur à semi-conducteur (10),

- dans lequel, pour la mesure du rayonnement alpha présent dans l'air d'origine artificielle pendant un intervalle de temps prédéfini, les étapes suivantes sont exécutées :

- comptage d'un nombre A1 de particules qui atteignent le détecteur à semi-conducteur (10) et qui possèdent une énergie qui est supérieure à un premier seuil d'énergie (S1) et est inférieure à un deuxième seuil d'énergie (S2),
- comptage d'un nombre A2 de particules qui atteignent le détecteur à semi-conducteur (10) et qui possèdent une énergie qui se situe dans une plage d'énergie prédéfinie (EB) autour de la raie d'énergie du Po-218,
- calcul d'un taux de comptage compensé A$\alpha$ de particules alpha en fonction du premier taux de comptage A1 et du deuxième taux de comptage A2, et
- détermination d'une grandeur de mesure qui caractérise le rayonnement alpha présent dans l'air d'origine artificielle, sur la base du taux de comptage compensé A$\alpha$ de particules alpha, et
- dans lequel, pour la mesure du rayonnement bêta présent dans l'air d'origine artificielle pendant l'intervalle de temps prédéfini, les étapes suivantes sont exécutées :

- comptage d'un nombre A3 de particules qui atteignent le détecteur à semi-conducteur (10) et qui possèdent une énergie qui est inférieure au premier seuil d'énergie (S1),
- comptage d'un nombre A4 de particules qui atteignent le détecteur à semi-conducteur (10) et qui possèdent une énergie qui est supérieure au deuxième seuil d'énergie (S2),
- calcul d'un taux de comptage compensé A$\beta$ de particules bêta en fonction du troisième taux de comptage A3 et du quatrième taux de comptage A4, et
- détermination d'une grandeur de mesure qui caractérise le rayonnement bêta présent dans l'air d'origine artificielle, sur la base du taux de comptage compensé A$\beta$ de particules bêta, dans lequel
- le deuxième seuil d'énergie (S2) définit une limite inférieure de la plage d'énergie (EB),
- le taux de comptage compensé A$\alpha$ de

particules alpha est calculé à l'aide de la formule A$\alpha$ = A1 - k1 * A2 * (1 + k2 * A2), où k1 et k2 sont des facteurs de compensation, et

- le taux de comptage compensé A$\beta$ de particules bêta est calculé à l'aide de la formule A$\beta$ = A3 - k3 * A4 * (1 + k4 * A4), où k3 et k4 sont des facteurs de compensation.

2. Procédé selon la revendication 1, **caractérisé en ce que**

- le premier seuil d'énergie (S1) se situe au-dessus d'un spectre d'énergie du rayonnement bêta d'origine artificielle et le deuxième seuil d'énergie (S2) se situe sur le flanc descendant de basse énergie de la raie d'énergie du Po-218 et au-dessus d'un spectre d'énergie du rayonnement alpha présent dans l'air d'origine artificielle.

3. Procédé selon l'une quelconque des revendications précédentes, **caractérisé en ce que**

- la plage d'énergie prédéfinie (EB) autour de la raie d'énergie du Po-218 couvre des énergies comprises entre 5,8 MeV et environ 6,3 MeV.

4. Dispositif de mesure du rayonnement alpha et bêta présent dans l'air d'origine artificielle, comprenant

- un détecteur à semi-conducteur (10) et
- une unité d'évaluation (30) qui est couplée au détecteur semi-conducteur (10), **caractérisé en ce que** :

- l'unité d'évaluation (30) est conçue pour la mise en œuvre du procédé selon l'une quelconque des revendications précédentes.

5. Dispositif selon la revendication 4, **caractérisé en ce qu'**un collimateur (50) est disposé, en particulier directement, devant le détecteur à semi-conducteur (10).

6. Dispositif selon la revendication 5, **caractérisé en ce que** le collimateur (50) possède une structure en nid d'abeille comprenant des cellules en nid d'abeille.

7. Dispositif selon la revendication 6, **caractérisé en ce que** les cellules en nid d'abeille présentent un diamètre compris entre 2 mm et 6 mm et une hauteur comprise entre 2 mm et 4 mm.

8. Dispositif selon l'une des revendications 4 à 7, **caractérisé en ce que**

- le dispositif possède un certain nombre de discriminateurs à canal unique (21-1 à 21-3), présentant en particulier également des seuils d'énergie se situant dans la plage transuranienne.

9. Dispositif selon l'une quelconque des revendications 4 à 8, **caractérisé en ce que** le détecteur à semi-conducteur (10) est un détecteur à semi-conducteur en Si (10).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010000836 A1

**In der Beschreibung aufgeführte Nicht-Patentliteratur**

- **JOSEPH F KORDAS et al.** A REVIEW OF MEASUREMENT TECH-NIQUES FOR STACK MONITORING OF LONG-LIVED ALPHA EMITTERS. *IEEE TRANSAC-TIONS ON NUCLEAR SCIENCE*, 01 February 1979, vol. NS-26 (1)